# EUROPEAN PATENT SPECIFICATION

(11) **EP 2 048 900 B1**
(45) Date of publication and mention of the grant of the patent: **30.11.2011**
(21) Application number: 07118165.5
(22) Date of filing: 10.10.2007
(51) Int. Cl.: H04W 8/24, H04L 29/08, G06F 7/00, G06K 19/06, H04H 20/38

(54) **Telecommunications chip card and a method thereof**
Telekommunikationschipkarte und Verfahren dafür
Carte à puce de télécommunications et procédé correspondant

(43) Date of publication of application: 15.04.2009
(60) Divisional application: 11179978.9
(73) Proprietor: Morpho Cards GmbH, 24220 Flintbek (DE)
(72) Inventor: Cricco, Rémy, 13013 Marseille (FR)
(74) Representative: Richardt Patentanwälte

(56) References cited:
- WO-A-01/39464
- WO-A-99/35771
- US-A1- 2005 184 163
- US-A1- 2006 113 379
- "Smart Cards; Application invocation API by a UICC Webserver for the Java Card platform; (Release 7); ETSI TS 102 588" ETSI STANDARDS, LIS, SOPHIA ANTIPOLIS CEDEX, FRANCE, vol. SCP-T, no. V2.0.0, 1 May 2007 (2007-05-01), XP014039512 ISSN: 0000-0001

## Description

### Technical field

The invention relates to a telecommunications chip card for carrying personalization data, to a handset and to a method thereof.

### Background and related art

In network technologies such as GSM and UMTS, a telecommunications chip card is used in mobile terminals, ensuring the integrity and security of the subscriber's identity data. In UMTS and GSM it may be called the UICC or UMTS Integrated Circuit Card.

Mobile TV is known as the technology that brings TV services to mobile devices. Depending on the receiver, it may combine the services of a mobile phone with television content. One way of delivering mobile TV is using a one-way dedicated broadcast network. These include digital video broadcasting-handheld (DVB-H), the digital video broadcast satellite service to handsets (DVB-SH), digital multimedia broadcasting (DMB), TDtv (based on TD-CDMA), 1seg (based on ISDB-T), DAB and MediaFLO.

One of the drawbacks of using a unidirectional dedicated broadcast network, such as terrestrial transmissions, is the limitation of interactivity services with an easy implementation and with the possibility of deployment in a wide variety of mobile devices.

WO 99/35771 discloses a telecommunication method comprising the integration of programme-related digital data into a TV or radio programme and transmission of said programme, the reception and playback of the programme by a mobile telephone combined with a TV or radio receiving system, where the receiving system comprises a chip card reader into which the user of the receiving system can insert a SIM card to identify himself.

ETSI TS 102 588 (2007-05-01) defines an API that allows a UICC based Smartcard WebServer defined by the OMA to forward HTTP requests to an applet and to receive response from the applet and it also defines the applet to register and unregister from the Smartcard WebServer.

US 2005/0184163 A1 discloses an application identifier for an application installed on a smart card. The application identifier comprises a registered application provider identifier (RID). An identifier for a network resource is generated from the RID. The identifier is used for transmitting a request to the network resource and for receiving a response to the request.

WO 01/39464 A1 discloses a chip card that can communicate with an external device via a CP interface, standardized data units being defined for said communication.

US 2006/0113379 A1 discloses a method to trigger an action in a communication interface of a terminal, such as a mobile, including a first application part, from a second application part in a chip card. The steps are executed after a command designating the action and transmitted from the frist to the second part.

There is therefore a need for a telecommunications chip card or UICC for carrying personalization data, an improved handset and a method adapted for performing in accordance with the invention.

### Summary of the invention

The present invention provides a telecommunications chip card for carrying personalization data for connection to at least a mobile telecommunication network and comprising at least an applet manager and at least a first applet. The telecommunications chip card further comprising means for receiving a registration of a first handset entity from a chip card reader to a first applet manager; means for forwarding the registration from the first applet manager to the at least first applet; means for sending at least a first control data from the at least first applet to the first applet manager and means for forwarding the at least first control data from the first applet manager to the chip card reader for comparison of the at least first control data with a first data event related to a digital data broadcast by the first handset entity. The telecommunications chip card further comprises: means for receiving at least a portion of the first data event from the first handset entity through the chip card reader to at least the first applet manager, if the portion of the first data event corresponds to at least the first control data; means for forwarding the portion of the first data event from the first applet manager to at least the first applet; means for processing the portion of the first data event for generating a first return signal by at least the first applet and means for sending a first return signal from at least the first applet to the first applet manager. One of the advantages is that allows imple menting new services and interaction with the first handset and with the first handset entity using only the chip card.

The term "handset" as used herein encompasses any wireless portable telecommunications device such as mobile phone, smart phone, portable media player (PMP), personal digital assistant (PDA) or laptop. The term "applet" as used herein encompasses any card applet such as java applet, windows applet or MULTOS application. The term "chip card" as used herein encompasses as well smart card, integrated circuit card (ICC) or portable data carrier with interoperable processor.

In accordance with an embodiment of the invention, the telecommunications chip card further comprises a second applet manager; means for receiving a first response of the first handset entity from the chip card reader by the first applet manager and means for transferring the first response from the first applet manager to the second applet manager for handset or chip card customization. One of the advantages of the embodiments is that it enables new services to the users of the handset by using the bandwidth of the digital data broadcast network, by transferring the response from a first applet manager coupled to a handset entity, as for example a rendering means, to a second applet manager.

In accordance with the invention, the telecommunications chip card further comprises a second applet manager; means for receiving a first response of the first handset entity from the chip card reader by the first applet manager and means for transferring the first response to the second applet manager for communicating with a mobile communication network. One of the advantages of the invention is that it allows the user of the handset entity to use a feedback channel in order to respond to a request sent by the digital data broadcast network or by the user of the handset.

In accordance with an embodiment of the invention, the telecommunications chip card further comprises a second applet manager; means for receiving a first response of the first handset entity from the chip card reader by the first applet manager and means for transferring the first response to the second applet manager, the second applet manager being operable for communicating with a computer via a physical interface or a short-range wireless technology. One of the advantages of the embodiments is that allows a connection to a computer that may be connected to the internet, as a feedback channel to respond to a request sent by the digital broadcast network or by the user from the handset.

In accordance with an embodiment of the invention, the first return signal from the first applet to the first applet manager corresponds to a description of a rich interactive application for being displayed on the first handset entity. One of the advantages of the embodiments is that allows the interactivity between the handset entity, the chip card, the digital broadcast network and the user of the handset.

In accordance with an embodiment of the invention, the telecommunications chip card further comprises a second applet manager; means for receiving a first response of the first handset entity from the chip card reader by the first applet manager and means for using the first response of the first handset entity for handset customization. One of the advantages of the embodiments is that enables new services to the users of the handset by using the bandwidth of the digital data broadcast network

In accordance with an embodiment of the invention, the first applet manager and the first applet can be implemented as a single applet. One of the advantages of the embodiments is that simplifies the communication between the applets and the handset entities when, for example, only one applet is available.

In another aspect, the invention relates to a handset comprising: a chip card reader for receiving a telecommunications chip card, the multiplexer being adapted for processing the digital data broadcast from a unidirectional broadcast network and connected to the chip card reader; a rendering means for rendering a second data event and coupled to the multiplexer and connected to the chip card reader; means for separating the received digital data broadcast by the multiplexer into a second data event for rendering by the rendering means and a portion of first data event for handset customization by a first applet manager in the chip card; means for sending the second data event to the rendering means and means for sending the portion of first data event to chip card reader for processing by a first applet manager in the chip card. One of the advantages of the embodiments is that allows an interaction from the telecommunications chip card with the different elements of the network as the digital data broadcast network (or mobile TV network), with the rendering means (as a media player) and with the user that handles the handset

In another aspect, the invention relates to a data processing method of controlling a handset, the handset having an integrated chip card reader for receiving a telecommunications chip card, the telecommunications chip card comprising at least a first applet manager and at least a first applet, the handset having at least a first handset entity being adapted for receiving a digital data broadcast. The method comprising: registering the at least first handset entity to the first applet manager; forwarding the registration from the first applet manager to the at least first applet; sending at least first control data from the at least first applet to the first applet manager; forwarding the at least first control data from the first applet manager to the first handset entity; comparing the at least first control data with at least a first data event related to a digital data broadcast by the handset entity; sending at least a portion of the first data event from the first handset entity to at least the first applet manager, if the portion of the first data event corresponds to at least the first control data. The method further comprises: forwarding the portion of the first data event from the first applet manager to at least the first applet; processing the portion of the first data event for generating a first return signal by at least the first applet; sending the first return signal from at least the first applet to the first applet manager.

In accordance with an embodiment of the invention, the chip card further comprises a second applet manager and the method further comprises: receiving a first response from the first handset entity by the first applet manager; transferring the first response from the first applet manager to the second applet manager for handset customization.

In accordance with an embodiment of the invention, the chip card further comprises a second applet manager and the method further comprises: receiving a first response from the first handset entity by the first applet manager; transferring the first response to the second applet manager for communicating with a mobile communications network.

In accordance with an embodiment of the invention, the first return signal from the first applet to the first applet manager corresponds to a a description of a rich interactive application for being displayed on the first handset entity.

In accordance with an embodiment of the invention, the handset further comprises a second handset entity and the method further comprises: separating the digital data broadcast by the first handset entity into a portion of first data event for handset customization by the first applet manager and a second data event for rendering by the second handset entity.

In accordance with an embodiment of the invention, the telecommunications chip card further comprises a second applet manager coupled to the second handset entity and the method further comprises forwarding the first return signal from the first applet manager to the second applet manager; adapting the first return signal to a rendering format of the second handset entity.

In another aspect, the invention relates to a computer program product in a telecommunications chip card for carrying personalization data for connection to at least a mobile telecommunications network and comprising at least an applet manager and at least a first applet, the telecommunications chip card further comprising: receiving a registration of a first handset entity from a chip card reader to a first applet manager; forwarding the registration from the first applet manager to the at least first applet; sending at least a first control data from the at least first applet to the first applet manager and forwarding the at least first control data from the first applet manager to the chip card reader for comparison of the at least first data with a first data event related to a digital data broadcast by the first handset entity. The computer program product further comprises: receiving at least a portion of the first data event from the first handset entity through the chip card reader to at least the first applet manager, if the portion of the first data event corresponds to at least the first control data; forwarding the portion of the first data event from the first applet manager to at least the first applet; processing the portion of the first data event for generating a first return signal by at least the first applet; and sending a first return signal from at least the first applet to the first applet manager.

### Brief description of the drawings

In the following preferred embodiments of the invention are described in greater detail by way of example only making reference to the drawings in which:
- Fig. 1: is a block diagram of a telecommunications method in accordance with an embodiment of the invention,
- Fig. 2: is a sequence of operation of a telecommunications method in ac- cordance with a first preferred embodiment of the invention,
- Fig. 3: is a block diagram of a telecommunications method in accordance with a second embodiment of the invention,
- Fig. 4: is a block diagram of a further preferred embodiment of a telecom- munications method of the invention,
- Fig. 5: is a block diagram of a further preferred embodiment of a telecom- munications method of the invention,
- Fig. 6: is a block diagram of a further preferred embodiment of a telecom- munications method of the invention,
- Fig. 7: is a block diagram of a further preferred embodiment of a telecom- munications method of the invention,

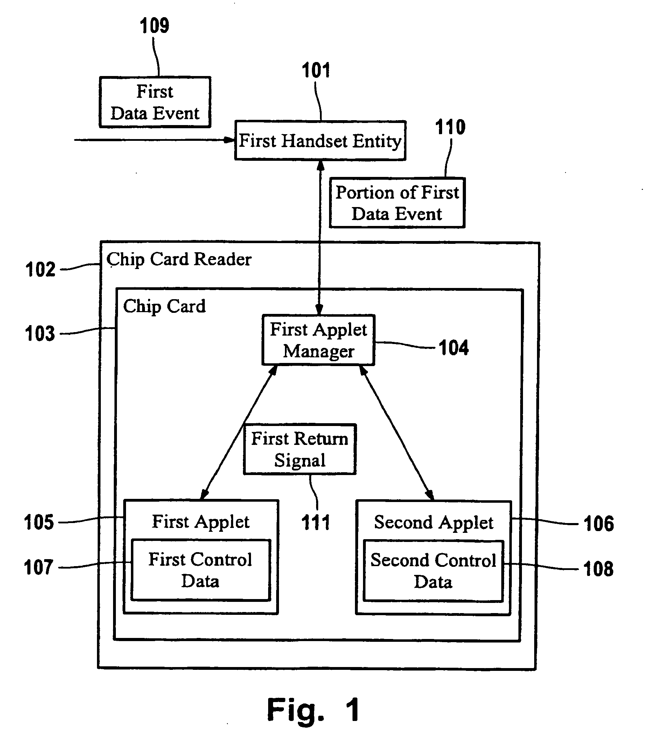

Fig. 1 shows a block diagram of a handset that includes a first handset entity 101, a chip card reader 102 for reading a chip card 103. The chip card further comprises a first applet manager 104, a first applet 105 and may include a second applet 106. The first applet 105 further comprises the first control data 107 and the second applet 106 may comprise a second control data 108.

On the handset startup, the first handset entity sends a registration to the first applet manager 104. The first applet manager 104 forwards this registration to the at least first applet 105. The first applet 105 sends to the first applet manager 104 the at least first control data 107. The first applet manager then forwards this first control data to the first handset entity 101. The first handset entity 101 receives a first data event 109 and compares the first data event 109 with the at least first control data 107. Based on this comparison, the first handset entity 101 sends at least a portion of the first data event 110 if the portion of the first data event 110 corresponds to at least one of the at least first control data 107. The first applet manager 104 forwards the portion of the first data event 110 to at least the first applet 105. At least the first applet 105 processes the portion of the first data event 110 for generating a first return signal to the first applet manager 104. The first return signal is then sent from at least the first applet to the first applet manager.

The second applet 106 may also be present in the chip card or may be added at a later point through an over the air update. This second applet 106 generates a second control data 108 and performs following the steps of the invention. The presence of the first applet manager 104 even by having a first applet 105 assures the possibility of updating the chip card by adding a second applet 106 or a plurality of applets. Alternatively, at least the first applet manager and at least the first applet may be implemented by a single applet. The applet manager and the applet may be implemented as independent card applets or java card applets, or communicating together on a single card applet or java card applet. The chip card may be also implemented as a secure element within a handset and perform all the operations according to the invention.

The registration of the first handset entity 101 may include a predefined URL on the first applet manager 104, using for example a command as get/register. A predefined URL is understood as a Uniform Resource Identifier (URI) or any syntax for global identifiers of network retrievable documents. The first applet manager then may pass the request or the registration to other applets as the first and second applet 105, 106 that will answer with a series of events or control data to register on the first applet manager or the first handset entity. This information may include adding the URL of the applets for the further direct access. When the handset is receiving digital data broadcasts from a mobile TV broadcasting network, the first handset entity may receive a portion of these digital data broadcasts and this portion may be called the first data event 109.

One of the advantages of the embodiments is that allows implementing new services and interaction with the first handset and with the first handset entity using only the chip card. All these types of services and small applications are stored in the applets that are managed by the first applet manager. Another advantage of the embodiments is that allows an interaction from the telecommunications chip card with the different elements of the network as the digital data broadcast network (or mobile TV network), with the rendering means (as a media player) and with the user that handles the handset. The digital data broadcast may be compliant with one of the the mobile TV broadcasting networks as DVB, ISDB, and DMB. The mobile telecommunications network may be compliant with the standards as GSM, UMTS, WiMax. The interaction of the handset and handset entities may be understood as a generic service framework running in the telecommunications chip card.

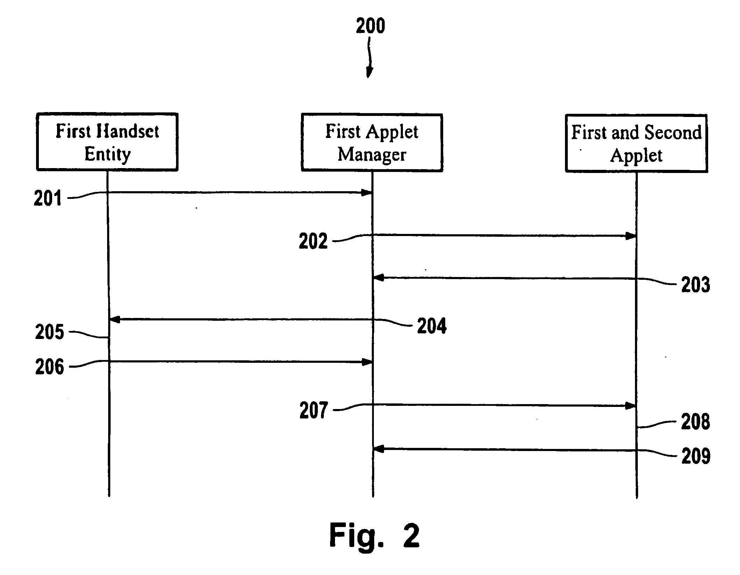

Fig. 2 shows a sequence of operation diagram. The sequence of operation diagram depicts the steps performed and the messages exchanged between the first handset entity, the first applet manager, and the first and second applet. First the first handset entity sends a registration to the first applet manager 201. Then, this registration is forwarded from the first applet manager to the first and second applet 202. The first and second applets generate a first and second control data that is sent to the first applet manager 203. Then, the first and second control data is forwarded from the first applet manager to the first handset entity 204. This first and second control data is used for comparison with the first data event 205. If the portion of the first data event corresponds to at least one of the first and second control data then the portion of the first data event is sent to the first applet manager 206. This portion is then forwarded to the first and second applets 207. The applets process the portion of the first data event 208 and generate a first return signal to the first applet manager 209.

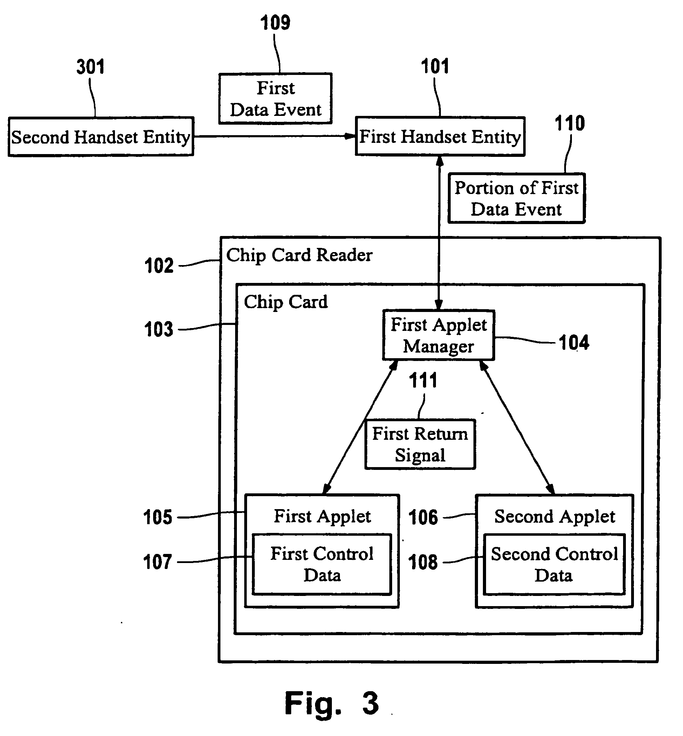

Fig. 3 shows a block diagram of a handset including a first handset entity 101 and a chip card reader 102. Fig. 3 further shows a chip card 103. The elements in the embodiment shown in fig. 3 that corresponds to elements of the embodiment of fig. 1 have been designated by the same reference signals. The first handset entity 101 is a rendering means used for rendering the first data event. On the handset startup, the first handset entity calls a predefined URL on the first applet manager and requests a registration. The first applet manager 104 passes the request to all the applets 105, 106 that responds with the first and second control data 107, 108. This control data may include the URL for a direct access to the applets. The first data event is related to a digital data broadcast that may include video, video content or electronic service guide. This first data event has been previously processed by a second handset entity 301. When the first handset entity 101 is received in the first data event 109 it compares the first and second control data 107, 108 with the received first data event 109. If the first data event corresponds to at least one of the first and second control data 107, 108, then a portion of the first data event is sent 110. The first and second control data 107, 108 may be seen as information related to the first data event as changes in the first handset entity as turned off or on or changing the stream of the digital data broadcast or the channel of the network. The portions of the first data event 110 may include the time and the type of stream or some notification about the channels that are rendered using the first handset entity.

When the first data event matches at least one of the first and second control data and the portion of the first data event 110 is sent to the first applet manager, the first applet manager 104 forwards this information to the applet whose corresponding the matching of the control data. For example, if the first applet sends a first control data 107 to the first handset entity with the information of e.g. a user zapping a channel, then the portion of the first data event 110 will be sent to the specific first applet 105 for further processing. The first applet 105 then generates a first return signal 111 to the first applet manager 104. The first applet manager 104 then forwards the first return signal 111 to the first handset entity 101.

This first return signal 111 may include for example notification of adult/violent programs, or notifications of a price change, as well as advertisement to be rendered by the first handset entity. One of the advantages of the embodiments is the type of services that may run on one of the applets. One of the services is related to the parental control, where a dedicated applet implements a set of rights introduced by a user in collaboration with the rendering means or the media player. The applet transmits a description of a rich interactive application. This description may be for example in the form of a HTML page that is displayed as pop-up windows with the restrictions to be applied to the user of the rendering means.

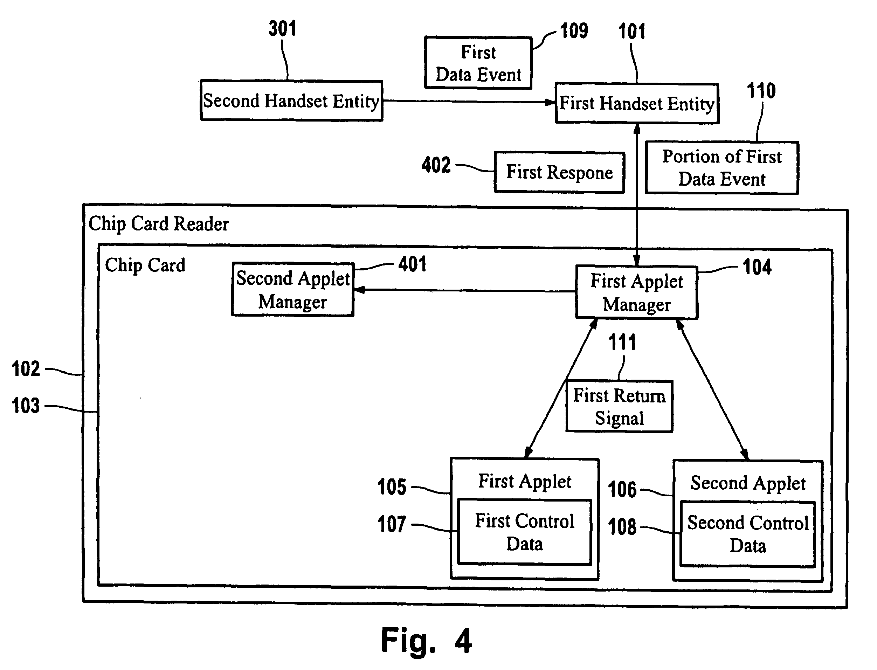

Fig. 4 shows a block diagram of a handset including a first and second handset entity and a chip card reader, and a chip card comprising a first and second applet manager. The first handset entity is a rendering means and the second handset entity is a demultiplexer. The elements in the embodiment shown in fig. 4 that correspond to elements of the embodiment of fig. 1 have been designated by the same reference signals. After the comparison between the first data event 109 and the first and second control data 107, 108 done by the first handset entity 101 has been completed, the series of signals between the first handset entity and the first applet manager 104 are changed as the portion of the first data event 110 and a first return signal 111. Depending on the content of the first return signal 111 that arrives at the first handset entity 101, a first response 402 may be generated. This first response 402 is forwarded to the first applet manager 104 that may require consent the first response 402 to the second applet manager 401. The second applet manager 401 then uses this first response 402 for handset or chip card customization and administration purposes. This handset or chip card customization and administration might include, for example, modification of the handset parameters as the user interface, the applications, user data, and the possibility of making available new services to the handset. The embodiment is particularly advantageous as it may enable new services to the users of the handset by using the great bandwidth of the digital data broadcast network if the for example cellular mobile network as UMTS or GSM is not available. The first return signal 111 that was sent to the first handset entity 101 may include information regarding a request to the user of the handset about the parameters to be used during the handset customization.

In a further advantage of the embodiments, the chip card is able to store and manage data content related to the electronic service guide, using the digital data broadcast or the cellular mobile telecommunications network to upload information or web pages describing programs displayed on the electronic service guide and rendered by the rendering means. Subsequently, the user of the rendering means has access to this information using the applets that interact with the rendering means.

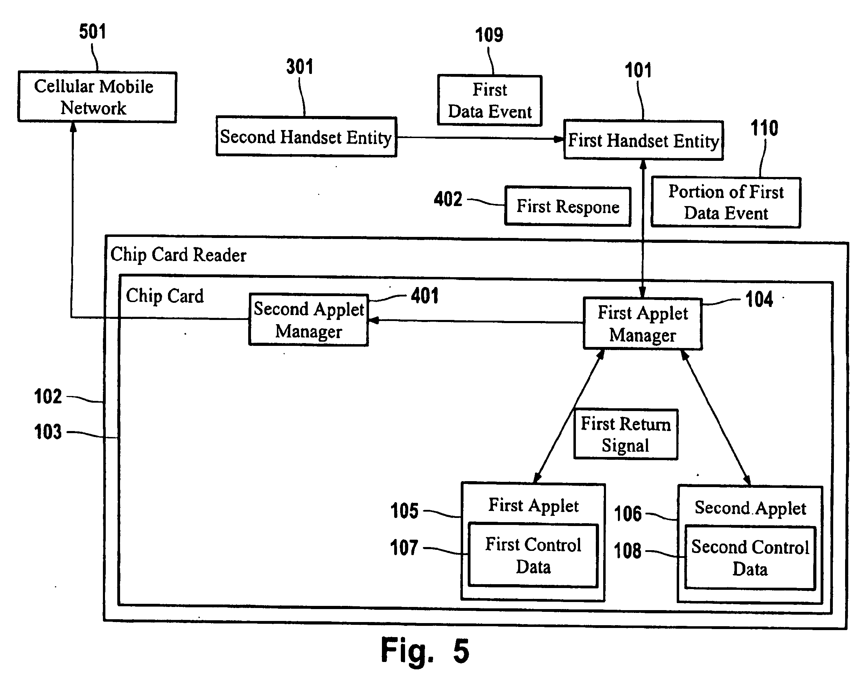

Fig. 5 shows a block diagram of a chip card 103, a handset that comprises a first and second entity 101, 301 and a chip card reader 102 for reading the chip card 103. The chip card further comprises a first and second applet manager 104, 401. The second applet manager 401 is being adapted for communicating with a cellular mobile network 501. When the first handset entity 101 that corresponds to rendering means starts receiving a first data event 109 that is related to the digital data broadcast, it compares the received first data event 109 with the first and second control data 107, 108. Based on the comparison made by the first handset entity 101 a portion of the first data event 110 may be sent to one of the first and second applets 105, 106 and a first return signal may be generated by one of the applets and sent to the first handset entity 101. If the first return signal 111 requires a response from the first handset entity, then the first response 402 will be generated and sent to the first applet manager. Then, the first response 402 is forwarded to the second applet manager 401 that allows connecting to cellular mobile network 501 and sending this first response 402 to the network 501.

One of the advantages of the embodiments is that allows the user of the handset entity to use a feedback channel in order to respond to a request sent by the digital data broadcast network. As the digital data broadcast network is in general a unidirectional network, and then the second applet manager 401 manages all the data so that it can be fed back to the system. Another advantage of the embodiments is the possibility to manage a voting or advertisement request from the chip card. This voting request might be generated by a mobile network operator using one of the digital data broadcast networks to send or trigger a vote during watching one of the channels in the rendering means. This information will be first processed by the applet manager connected to the multiplexer that will further send a request to the applets. Subsequently, the data will be transferred to a second applet manager there is coupled to the rendering means, sending all required information to the rendering means for setting a rich interactive application, for example in the form of an HTML page on the main screen of the media player and asking the user to generate a vote. The response of the rendering means will be forwarded to the applet manager that is adapted for processing and sending the data to a mobile cellular telecommunications network. Alternatively, the applet may be adapted for processing and sending the data to the mobile telecommunications network.

A further advantage of the embodiments is that allows collecting statistic information regarding the use of the rendering means and the channels displayed by the rendering means and watched by the user. The applets in the chip card will track the user habits by monitoring parameters as the channel, the time, duration and frequency of use and downloading this information on a regular basis using the feedback channel provided by a cellular telecommunications network. The mobile network operator then will be able to analyze and use this data to define and improve the usage of its services.

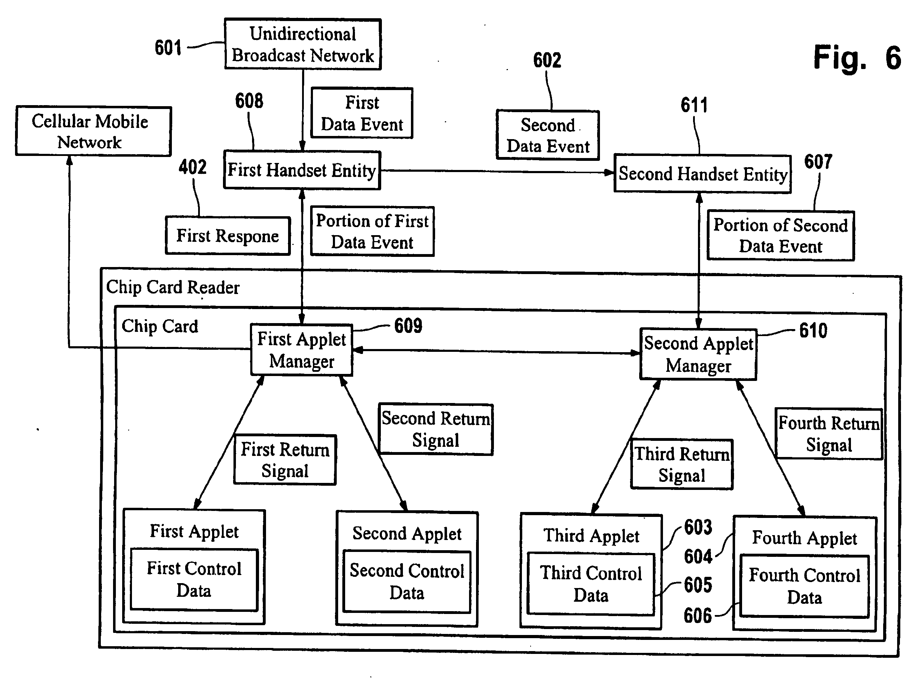

Fig. 6 shows a block diagram of a handset comprising a first and a second handset entity and a chip card, wherein the chip card reader is adapted for reading a chip card. The elements in the embodiment shown in fig. 6 that correspond to elements of the embodiment of fig. 1 have been designated by the same reference signals. In this first embodiment the first handset entity is the multiplexer and the second handset entity is a rendering means. On handset startup, the multiplexer calls a predefined URL on the first applet manager. The first applet manager 104 forwards this request to all applets first and second applet 105 and 106, that responds with a first and second control data 107, 108 to be registered in the first applet manager 104 and alternatively in the first handset entity 101.

When the handset receives a first data event 109 from a unidirectional broadcast network 601, the first handset entity 101 starts comparing this first data event 109 with at least the first and second control data 107, 108. If a portion of the first data event corresponds to at least one of the first and second control data 107, 108, then the portion of the first data event 110 will be sent to the first applet manager 104. The first applet manager 104 then forwards the portion of the first data event 110 to the applet that has sent the matched control data. At least one of the first and second applets 105, 106 processes the received portion of the first data event 110 and sends a first return signal 111 to the first applet manager 104. The first return signal 111 can be used by the first applet manager 104 for handset customization or handset administration purposes. Alternatively the first applet manager 104 if required by the service that is provided will forward the first return signal 111 to a second applet manager 401 that communicates with the second handset entity 301.

The first return signal 111 that is received by the second handset entity may be for example a request for a voting service to the user of the handset and the second handset entity, or an advertisement to be displayed by the second handset entity. This content of the first return signal 111 could be also a user interface parameter or applications being used by the second handset entity that will be updated or upgraded by the first return signal. The second handset entity 601 is at the same time rendering the second data event 602 that is provided by the first handset entity 101. The second data event 602 corresponds to the rendering portion of the first data event 109 that has been separated by the first handset entity 101.

Another advantage of the embodiments is that the mobile network operators are able to use the high speed channel of the mobile TV broadcasting network (or digital data broadcast network) to transport non-mobile TV data to be used by the telecommunications chip card and by the handset to perform different actions such as device management, dynamic management of mobile services and handset customizations.

The invention executes two new types of card application or applets to enable the interactivity between the user of the handset and the mobile network operator. A first type of card applications interact with generic data transmitted over the digital data broadcast or the so called mobile TV broadcasting network. The second type of card interacts directly with the mobile TV, or so called rendering means. These two applet managers can alternatively communicate to share the type of application and re-transmit it to the rendering means or as a feedback channel using the mobile cellular telecommunications network. The first type of card application receives data through the multiplexer coming from the digital data broadcast network and the second type of card application interact with the rendering means or the media player to display services, get user entries and if necessary transfer request to the mobile network operator or mobile telecommunications network. This type of service framework relies on the smartcard web server applications (SCWS) or any kind of SIM Toolkit mechanism as defined in the telecommunications standards such as ETSI and 3GPP.

In further embodiments the first and second control data 107, 108 may be updated using the unidirectional broadcast network 601 that sends the data and that is received by the first handset entity that further forwards the information up to the applets that modifies the content of the first and second control data 107, 108. The second applet manager 401 may be connected to a third and a fourth applet 603, 604 that contained a third and fourth control data 605, 606 respectively. This third and fourth control data 605, 606 may be also updated or modified through the unidirectional broadcast network 601. The third and fourth applets 603, 604 are used in general to send and receive control data to and from the second handset entity 301, whereas the first and second applet communicate in general with the first handset entity 101 using the first applet manager 104. All responses or feedbacks may be sent using the cellular mobile network as a feedback channel and using one of the first and second applet managers.

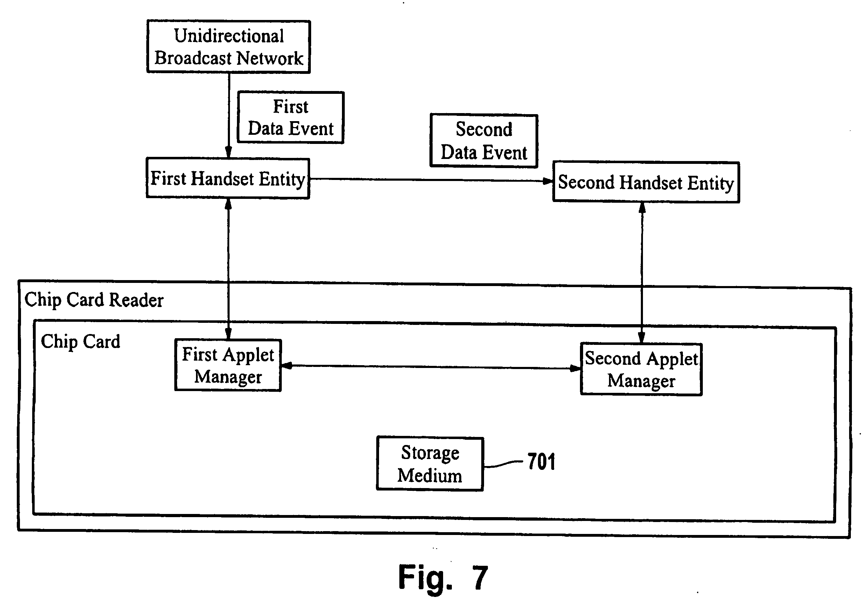

Fig. 7 shows the use of a telecommunications chip card for buffering of a first data event from a rendering means. Alternatively, the buffering of a first data may be sent from a demultiplexer. The telecommunications chip card may buffer the data event in a storage medium.

A further advantage of the embodiments is that allows time shifting from the telecommunications chip card. Time shifting allows depending on the capacity of the telecommunications chip card to store the recorded programs while the user is not available or to manage the VCR service that is storing the recording programs on the server. Telecommunications chip card with a large storage medium will be able to store the stream content that is generally sent to the media player on the chip card instead of using the internal memory of the handset. When the user makes a request, the stored stream in telecommunications chip card will be forwarded to the rendering means or to the media player to play the recorded sequence. This service has the advantage that it may use the telecommunications chip card as a storage medium when the internal handset memory is not available or it is full. In telecommunications chip card with little amount of storage, the chip card sends a VCR request to a time shifting server. This server will record the digital data broadcast while the user is requesting to do so. When the user makes a request to play the recorded stream, the time shifting server sends the stream using a unicast medium. The chip card and the applets will then manage the communication between the time shifting server and the rendering means.

### List of Reference Numerals

| | |
|---|---|
| 101 | First Handset Entity |
| 102 | Chip Card Reader |
| 103 | Chip Card |
| 104 | First Applet Manager |
| 105 | First Applet |
| 106 | Second Applet |
| 107 | First Control Data |
| 108 | Second Control Data |
| 109 | First Data Event |
| 110 | Portion of First Data Event |
| 111 | First Return Signal |
| 200 | Sequence of Operation Diagram |
| 301 | Second Handset Entity |
| 401 | Second Applet Manager |
| 402 | First Response |
| 501 | Cellular Mobile Network |
| 601 | Unidirectional Broadcast Network |
| 602 | Second Data Event |
| 603 | Third Applet |
| 604 | Forth Applet |
| 605 | Third Control Data |
| 606 | Forth Control Data |
| 607 | Portion of Second Data Event |
| 608 | First handset entity |
| 609 | First applet manager |
| 610 | Second applet manager |
| 611 | Second handset entity |

## Claims

1. A telecommunications chip card (103) for carrying personalization data for connection to at least a mobile telecommunications network and comprising at least a first applet manager (104), a second applet manager (401) and at least a first applet (105), the telecommunications chip card (103) further comprising:
- means for receiving a registration of a first handset entity (101) from a chip card reader (102) to a first applet manager (104);
- means for forwarding the registration from the first applet manager (104) to the at least first applet (105);
- means for sending at least a first control data (107) from the at least first applet (105) to the first applet manager (104);
- means for forwarding the at least first control data (107) from the first applet manager (104) to the chip card reader (102) for comparison of the at least first control data (107) with a first data event (109) related to a digital data broadcast by the first handset entity (101);
- means for receiving at least a portion of the first data event (110) from the first handset entity (101) through the chip card reader (102) to at least the first applet manager (104), if the portion of the first data event (110) corresponds to at least the first control data (107);
- means for forwarding the portion of the first data event (110) from the first applet manager (104) to at least the first applet (105);
- means for processing the portion of the first data event (110) for generating a first return signal (111) by at least the first applet (105);
- means for sending a first return signal (111) from at least the first applet (105) to the first applet manager (104);
- means for receiving a first response (402) of the first handset entity (101) from the chip card reader (102) by the first applet manager (104);
- means for transferring the first response (402) to the second applet manager (401) for communicating with a mobile communications network (501).

2. A telecommunications chip card as in claim 1, wherein the chip card (103) further comprises a second applet manager (401) and the telecommunication chip card further comprises:
- means for receiving a first response (402) of the first handset entity (101) from the chip card reader (102) by the first applet manager (104);
- means for transferring the first response (402) from the first applet manager (104) to the second applet manager (401) for handset customization.

3. A telecommunications chip card as in claim 1, wherein the chip card (103) further comprises a second applet manager (401) and:
- means for receiving a first response (402) of the first handset entity (101) from the chip card reader (102) by the first applet manager (104); and
- means for transferring the first response (402) to the second applet manager (401), the second applet manager (401) being operable for communicating with a computer via a physical interface or a short-range wireless technology.

4. A telecommunications chip card as in any of claims 1 to 2, wherein the first return signal (111) from the first applet (105) to the first applet manager (104) corresponds to a description of a rich interactive application for being displayed on the first handset entity (101).

5. A telecommunications chip card as in claim 1, wherein the chip card further comprises a second applet manager (610) and:
- means for receiving a first response (402) of the first handset entity (101, 608) from the chip card reader (102) by the first applet manager (104, 609);
- means for using the first response (402) of the first handset entity (101, 608) for handset customization.

6. A handset comprising:
- a chip card reader (102) for receiving a telecommunications chip card (103) according to any of claims 1 to 5;
- a demultiplexer (301) being adapted for processing a first data event from a unidirectional broadcast network (601) and connected to the chip card reader (102);
- a rendering means (101) for rendering a second data event (109) and coupled to a demultiplexer (301) and connected to the chip card reader (102);
- means for separating the first data event by the demultiplexer (301) into a second data event (109) for rendering by the rendering means and a portion of first data event for handset customization by a first applet manager (104) in the chip card (103);
- means for sending the second data event (109) to the rendering means (101);
- means for sending the portion of first data event to a chip card reader (102) for processing by a first applet manager (104) in the chip card (103);
- means for receiving a first response (402) of the first handset entity (101) from the chip card reader (102) by the first applet manager (104);
- means for transferring the first response (402) to a second applet manager (401) for communicating with a mobile communications network (501)..

7. A data processing method of controlling a handset, the handset having an integrated chip card reader (102) for receiving a telecommunications chip card (103), the telecommunications chip card (103) comprising at least a first applet manager (104), a second applet manager (401) and at least a first applet (105), the handset having at least a first handset entity (101) being adapted for receiving a digital data broadcast, the method comprising:
- registering the at least first handset entity (101) to the first applet manager (104);
- forwarding the registration from the first applet manager (104) to the at least first applet (105);
- sending an at least first control data (107) from the at least first applet (105) to the first applet manager (104);
- forwarding the at least first control data (107) from the at least first applet manager (104) to the first handset entity (101);
- comparing the at least first control data (107) with at least a first data event (109) related to a digital data broadcast by the handset entity (101);
- sending at least a portion of the first data event (110) from the first handset entity (101) to at least the first applet manager (104), if the portion of the first data event (110) corresponds to at least the first control data (107);
- forwarding the portion of the first data event (110) from the first applet manager (104) to at least the first applet (105);
- processing the portion of the first data event (110) for generating a first return signal (111) by at least the first applet (105);
- sending the first return signal (111) from at least one of the first applet (105) to the first applet manager (104);
- receiving a first response (402) of the first handset entity (101) from the chip card reader (102) by the first applet manager (104);
- transferring the first response (402) to the second applet manager (401) for communicating with a mobile communications network (501).

8. A method as in claim 7, wherein the chip card further comprises a second applet manager (401) and the method further comprises:
- receiving a first response (402) from the first handset entity (101) by the first applet manager (104);
- transferring the first response (402) to the second applet manager (401) for communicating with a mobile communications network (501).

9. A method as in any of claims 7 to 8, wherein the first return signal (111) from the first applet (105) to the first applet manager (104) corresponds to a description of a rich interactive application for being displayed on the first handset entity.

10. A method as in claim 7, wherein the handset further comprises a second handset entity (611) and the method further comprises:
- separating the digital data broadcast by the first handset entity (101, 608) into a portion of first data event (110) for handset customization by the first applet manager (104, 609) and a second data event (602) for rendering by the second handset entity (611).

11. A method as in claim 7 and claim 10, wherein the chip card (103) further comprises a second applet manager (610) coupled to the second handset entity (611) and the method further comprises:
- forwarding the first return signal (111) from the first applet manager (609) to the second applet manager (610);
- adapting the first return signal (111) to a rendering format of the second handset entity (611).

12. A computer program product in a telecommunications chip card (103) for carrying personalization data for connection to at least a mobile telecommunications network and comprising at least a first applet manager (104), a second applet manager and at least a first applet (105), the telecommunications chip card further comprising:
- receiving a registration of a first handset entity (101) from a chip card reader (102) to a first applet manager (104);
- forwarding the registration from the first applet manager (104) to the at least first applet (105);
- sending at least a first control data (107) from the at least first applet (105) to the first applet manager (104);
- forwarding the at least first control data (107) from the first applet manager (104) to the chip card reader (102) for comparison of the at least first control data (107) with a first data event (109) related to a digital data broadcast by the first handset entity (101);
- receiving at least a portion of the first data event (110) from the first handset entity (101) through the chip card reader (102) to at least the first applet manager (104), if the portion of the first data event (110) corresponds to at least the first control data (107);
- forwarding the portion of the first data event (110) from the first applet manager (104) to at least the first applet (105);
- processing the portion of the first data event (110) for generating a first return signal (111) by at least the first applet (105);
- sending a first return signal (111) from at least the first applet (105) to the first applet manager (104);
- means for receiving a first response (402) of the first handset entity (101) from the chip card reader (102) by the first applet manager (104);
- means for transferring the first response (402) to the second applet manager (401) for communicating with a mobile communications network (501).

## Patentansprüche

1. Telekommunikatlons-Chipkarte (103) zum Führen von Personalisierungsdaten zur Verbindung mit mindestens einem Mobiltelekommunikationsnetz, umfassend mindestens einen ersten Applet-Manager (104), einen zweiten Applet-Manager (401) und mindestens ein erstes Applet (105), wobei die Telekommunikations-Chipkarte (103) ferner Folgendes umfasst:
- Mittel zum Empfangen einer Registration einer ersten Handapparat-Entität (101) von einem Chipkartenleser (102) bei einem ersten Applet-Manager (104);
- Mittel zum Weiterleiten der Registration von dem ersten Applet-Manager (104) zu dem mindestens ersten Applet (105);
- Mittel zum Senden mindestens von ersten Steuerdaten (107) von dem mindestens ersten Applet (105) zu dem ersten Applet-Manager (104);
- Mittel zum Weiterleiten der mindestens ersten Steuerdaten (107) von dem ersten Applet-Manager (104) zu dem Chipkartenleser (102) zum Vergleich der mindestens ersten Steuerdaten (107) mit einem ersten Datenereignis (109) in Bezug auf eine digitale Datenausstrahlung durch die erste Handapparat-Entität (101);
- Mittel zum Empfangen mindestens eines Teils des ersten Datenereignisses (110) von der ersten Handapparat-Entität (101) durch den Chipkartenleser (102) bei mindestens dem ersten Applet-Manager (104), wenn der Teil des ersten Datenereignisses (110) mindestens den ersten Steuerdaten (107) entspricht;
- Mittel zum Weiterleiten des Teils des ersten Datenereignisses (110) von dem ersten Applet-Manager (104) zu mindestens dem ersten Applet (105);
- Mittel zum Verarbeiten des Teils des ersten Datenereignisses (110) zum Erzeugen eines ersten Rücksignals (111) durch mindestens das erste Applet (105);
- Mittel zum Senden eines ersten Rücksignals (111) von mindestens dem ersten Applet (105) zu dem ersten Applet-Manager (104);
- Mittel zum Empfangen einer ersten Antwort (402) der ersten Handapparat-Entität (101) von dem Chipkartenleser (102) durch den ersten Applet-Manager (104);
- Mittel zum Transferieren der ersten Antwort (402) zu dem zweiten Applet-Manager (401) zum Kommunizieren mit einem Mobilkommunikationsnetz (501).

2. Telekommunikations-Chipkarte nach Anspruch 1, wobei die Chipkarte (103) ferner einen zweiten Applet-Manager (401) umfasst und die Telekommunikations-Chipkarte ferner Folgendes umfasst:
- Mittel zum Empfangen einer ersten Antwort (402) der ersten Handapparat-Entität (101) von dem Chipkartenleser (102) durch den ersten Applet-Manager (104);
- Mittel zum Transferieren der ersten Antwort (402) von dem ersten Applet-Manager (104) zu dem zweiten Applet-Manager (401) zur Handapparat-Anpassung.

3. Telekommunikations-Chipkarte nach Anspruch 1, wobei die Chipkarte (103) ferner einen zweiten Applet-Manager (401) und Folgendes umfasst:
- Mittel zum Empfangen einer ersten Antwort (402) der ersten Handapparat-Entität (101) von dem Chipkartenleser (102) durch den ersten Applet-Manager (104); und
- Mittel zum Transferieren der ersten Antwort (402) zu dem zweiten Applet-Manager (401), wobei der zweite Applet-Manager (401) zum Kommunizieren mit einem Computer über eine physische Schnittstelle oder eine drahtlose Technologie mit kurzer Reichweite betreibbar ist.

4. Telekommunikations-Chipkarte nach einem der Ansprüche 1 bis 2, wobei das erste Rücksignal (111) von dem ersten Applet (105) an den ersten Applet-Manager (104) einer Beschreibung einer Rich-Interaktivanwendung zur Anzeige auf der ersten Handapparat-Entität (101) entspricht.

5. Telekommunikations-Chipkarte nach Anspruch 1, wobei die Chipkarte ferner einen zweiten Applet-Manager (610) und Folgendes umfasst:
- Mittel zum Empfangen einer ersten Antwort (402) der ersten Handapparat-Entität (101, 608) von dem Chipkartenleser (102) durch den ersten Applet-Manager (104, 609);
- Mittel zum Verwenden der ersten Antwort (402) der ersten Handapparat-Entität (101, 608) zur Handapparat-Anpassung.

6. Handapparat, umfassend:
- einen Chipkartenleser (102) zum Empfangen einer Telekommunikations-Chipkarte (103) nach einem der Ansprüche 1 bis 5;
- einen Demultiplexer (301), der dafür ausgelegt ist, ein erstes Datenereignis von einem unidirektionalen Ausstrahlungsnetz (601) zu verarbeiten, und mit dem Chipkartenleser (102) verbunden ist;
- ein Wiedergabemittel (101) zum Wiedergeben eines zweiten Datenereignisses (109), das mit einem Demultiplexer (301) gekoppelt und mit dem Chipkartenleser (102) verbunden ist;
- Mittel zum Trennen des ersten Datenereignisses durch den Demultiplexer (301) in ein zweites Datenereignis (109) zur Wiedergabe durch das Wiedergabemittel und einen Teil des ersten Datenereignisses zur Handapparat-Anpassung durch einen ersten Applet-Manager (104) in der Chipkarte (103);
- Mittel zum Senden des zweiten Datenereignisses (109) zu dem Wiedergabemittel (101);
- Mittel zum Senden des Teils des ersten Datenereignisses zu einem Chipkartenleser (102) zur Verarbeitung durch einen ersten Applet-Manager (104) in der Chipkarte (103);
- Mittel zum Empfangen einer ersten Antwort (402) der ersten Handapparat-Entität (101) von dem Chipkartenleser (102) durch den ersten Applet-Manager (104);
- Mittel zum Transferieren der ersten Antwort (402) zu einem zweiten Applet-Manager (401) zum Kommunizieren mit einem Mobilkommunikationsnetz (501).

7. Datenverarbeitungsverfahren zum Steuern eines Handapparats, wobei der Handapparat einen integrierten Chipkartenleser (102) zum Empfangen einer Telekommunikations-Chipkarte (103) aufweist, wobei die Telekommunikations-Chipkarte (103) mindestens einen ersten Applet-Manager (104), einen zweiten Applet-Manager (401) und mindestens ein erstes Applet (105) umfasst, wobei der Handapparat mindestens eine erste Handapparat-Entität (101) aufweist, die dafür ausgelegt ist, eine digitale Datenausstrahlung zu empfangen, wobei das Verfahren die folgenden Schritte umfasst:
- Registrieren der mindestens ersten Handapparat-Entität (101) bei dem ersten Applet-Manager (104);
- Weiterleiten der Registration von dem ersten Applet-Manager (104) zu dem mindestens ersten Applet (105);
- Senden von mindestens ersten Steuerdaten (107) von dem mindestens ersten Applet (105) zu dem ersten Applet-Manager (104);
- Weiterleiten der mindestens ersten Steuerdaten (107) von dem mindestens ersten Applet-Manager (104) zu der ersten Handapparat-Entität (101);
- Vergleichen der mindestens ersten Steuerdaten (107) mit mindestens einem ersten Datenereignis (109) in Bezug auf eine digitale Datenausstrahlung durch die Handapparat-Entität (101);
- Senden mindestens eines Teils des ersten Datenereignisses (110) von der ersten Handapparat-Entität (101) zu mindestens dem ersten Applet-Manager (104), wenn der Teil des ersten Datenereignisses (110) mindestens den ersten Steuerdaten (107) entspricht;
- Weiterleiten des Teils des ersten Datenereignisses (110) von dem ersten Applet-Manager (104) zu mindestens dem ersten Applet (105);
- Verarbeiten des Teils des ersten Datenereignisses (110) zum Erzeugen eines ersten Rücksignals (111) durch mindestens das erste Applet (105);
- Senden des ersten Rücksignals (111) von mindestens einem des ersten Applet (105) zu dem ersten Applet-Manager (104);
- Empfangen einer ersten Antwort (402) der ersten Handapparat-Entität (101) von dem Chipkartenleser (102) durch den ersten Applet-Manager (104);
- Transferieren der ersten Antwort (402) zu dem zweiten Applet-Manager (401) zum Kommunizieren mit einem Mobilkommunikationsnetz (501).

8. Verfahren nach Anspruch 7, wobei die Chipkarte ferner einen zweiten Applet-Manager (401) umfasst und das Verfahren ferner Folgendes umfasst:
- Empfangen einer ersten Antwort (402) von der ersten Handapparat-Entität (101) durch den ersten Applet-Manager (104);
- Transferieren der ersten Antwort (402) zu dem zweiten Applet-Manager (401) zum Kommunizieren mit einem Mobilkommunikationsnetz (501).

9. Verfahren nach einem der Ansprüche 7 bis 8, wobei das erste Rücksignal (111) von dem ersten Applet (105) an den ersten Applet-Manager (104) einer Beschreibung einer Rich-Interaktivanwendung zur Anzeige auf der ersten Handapparat-Entität entspricht.

10. Verfahren nach Anspruch 7, wobei der Handapparat ferner eine zweite Handapparat-Entität (611) umfasst und das Verfahren ferner Folgendes umfasst:
- Trennen der digitalen Datenausstrahlung durch die erste Handapparat-Entität (101, 608) in einen Teil des ersten Datenereignisses (110) zur Handapparat-Anpassung durch den ersten Applet-Manager (104, 609) und ein zweites Datenereignis (602) zur Wiedergabe durch die zweite Handapparat-Entität (611).

11. Verfahren nach Anspruch 7 und Anspruch 10, wobei die Chipkarte (103) ferner einen mit der zweiten Handapparat-Entität (611) gekoppelten zweiten Applet-Manager (610) umfasst und das Verfahren ferner Folgendes umfasst:
- Weiterleiten des ersten Rücksignals (111) von dem ersten Applet-Manager (609) zu dem zweiten Applet-Manager (610);
- Anpassen des ersten Rücksignals (111) an ein Wiedergabeformat der zweiten Handapparat-Entität (611).

12. Computerpragrammpradukt in einer Telekommunikations-Chipkarte (103) zum Führen von Personalisierungsdaten zur Verbindung mit mindestens einem Mobiltelekommunikationsnetz und umfassend mindestens einen ersten Applet-Manager (104), einen zweiten Applet-Manager und mindestens ein erstes Applet (105), wobei die Telekommunikations-Chipkarte ferner Folgendes umfasst:
- Empfangen einer Registration einer ersten Handapparat-Entität (101) von einem Chipkartenleser (102) bei einem ersten Applet-Manager (104);
- Weiterleiten der Registration von dem ersten Applet-Manager (104) zu dem mindestens ersten Applet (105);
- Senden mindestens von ersten Steuerdaten (107) von dem mindestens ersten Applet (105) zu dem ersten Applet-Manager (104);
- Weiterleiten der mindestens ersten Steuerdaten (107) von dem ersten Applet-Manager (104) zu dem Chipkartenleser (102) zum Vergleich der mindestens ersten Steuerdaten (107) mit einem ersten Datenereignis (109) in Bezug auf eine digitale Datenausstrahlung durch die erste Handapparat-Entität (101);
- Empfangen mindestens eines Teils des ersten Datenereignisses (110) von der ersten Handapparat-Entität (101) durch den Chipkartenleser (102) bei mindestens dem ersten Applet-Manager (104), wenn der Teil des ersten Datenereignisses (110) mindestens den ersten Steuerdaten (107) entspricht;
- Weiterleiten des Teils des ersten Datenereignisses (110) von dem ersten Applet-Manager (104) zu mindestens dem ersten Applet (105);
- Verarbeiten des Teils des ersten Datenereignisses (110) zum Erzeugen eines ersten Rücksignals (111) durch mindestens das erste Applet (105);
- Senden eines ersten Rücksignals (111) von mindestens dem ersten Applet (105) zu dem ersten Applet-Manager (104);
- Mittel zum Empfangen einer ersten Antwort (402) der ersten Handapparat-Entität (101) von dem Chipkartenleser (102) durch den ersten Applet-Manager (104);
- Mittel zum Transferieren der ersten Antwort (402) zu dem zweiten Applet-Manager (401) zum Kommunizieren mit einem Mobilkommunikationsnetz (501).

## Revendications

1. Carte à puce pour télécommunications (103) destinée à transporter des données de personnalisation en vue d'une connexion à au moins un réseau de télécommunications mobiles et comprenant au moins un premier gestionnaire (104) de mini application, un second gestionnaire (401) de mini application et au moins une première mini application (105), la carte à puce pour télécommunications (103) comprenant en outre :
- un moyen permettant de recevoir l'enregistrement d'une première entité de combiné téléphonique (101) provenant d'un lecteur de carte à puce (102) vers un premier gestionnaire (104) de mini application
- un moyen permettant de faire suivre l'enregistrement provenant du premier gestionnaire (104) de mini application vers la ou les premières applications (105),
- un moyen permettant d'envoyer au moins une première donnée de commande (107) depuis la ou les premières applications (105) vers le premier gestionnaire (104) de mini application,
- un moyen permettant de faire suivre la ou les premières données de commande (107) provenant du premier gestionnaire (104) de mini application vers le lecteur de carte à puce (102) en vue d'une comparaison de la ou des premières données de commande (107) à un premier événement de données (109) se rapportant à une diffusion de données numériques effectué par la première entité de combiné téléphonique (101),
- un moyen permettant de recevoir au moins une partie du premier événement de données (110) provenant de la première entité de combiné téléphonique (101) par l'intermédiaire du lecteur de carte à puce (102) vers au moins le premier gestionnaire (104) de mini application, si la partie du premier événement de données (110) correspond à au moins la première donnée de commande (107),
- un moyen permettant de faire suivre la partie du premier événement de données (110) depuis le premier gestionnaire (104) de mini application vers au moins la première mini application (105),
- un moyen permettant de traiter la partie du premier événement de données (110) dans le but de générer un premier signal de retour (111) par au moins la première mini application (105),
- un moyen permettant d'envoyer le premier signal de retour (111) depuis au moins la première mini application (105) vers le premier gestionnaire (104) de mini application,
- un moyen permettant de recevoir une première réponse (402) de la première entité de combiné téléphonique (101) provenant du lecteur de carte à puce (102) par le premier gestionnaire (104) de mini application,
- un moyen permettant de transférer la première réponse (402) vers le second gestionnaire (401) de mini application afin de communiquer avec un réseau de communications mobiles (501).

2. Carte à puce pour télécommunications selon la revendication 1, la carte à puce (103) comprenant en outre un second gestionnaire (401) de mini application, et la carte à puce pour télécommunications comprend en outre :
- un moyen permettant de recevoir une première réponse (402) de la première entité de combiné téléphonique (101) provenant du lecteur de carte à puce (102) par le premier gestionnaire (104) de mini application,
- un moyen permettant de transférer la première réponse (402) depuis le premier gestionnaire (104) de mini application vers le second gestionnaire (401) de mini application en vue d'une personnalisation du combiné téléphonique.

3. Carte à puce pour télécommunications selon la revendication 1, la carte à puce (103) comprenant en outre un second gestionnaire (401) de mini application et :
- un moyen permettant de recevoir une première réponse (402) de la première entité de combiné téléphonique (101) provenant du lecteur de carte à puce (102) par le premier gestionnaire (104) de mini application, et
- un moyen permettant de transférer la première réponse (402) vers le second gestionnaire (401) de mini application, le second gestionnaire (401) de mini application pouvant être mis en oeuvre pour communiquer avec un ordinateur par l'intermédiaire d'une interface physique ou d'une technologie sans fil à courte portée.

4. Carte à puce pour télécommunications selon l'une quelconque des revendications 1 et 2, dans laquelle un premier signal de retour (111) provenant de la première mini application (105) vers le premier gestionnaire (104) de mini application correspond à une description d'une application interactive enrichie pour qu'elle soit affichée sur la première entité de combiné téléphonique (101).

5. Carte à puce pour télécommunications selon la revendication 1, la carte à puce comprenant en outre un second gestionnaire (610) de mini application et :
- un moyen permettant de recevoir une première réponse (402) de la première entité de combiné téléphonique (101, 608) provenant du lecteur de carte à puce (102) par le premier gestionnaire (104, 609) de mini application,
- un moyen permettant d'utiliser la première réponse (402) de la première entité de combiné téléphonique (101, 608) en vue d'une personnalisation du combiné téléphonique.

6. Combiné téléphonique comprenant :
- un lecteur de carte à puce (102) permettant de recevoir une carte à puce pour télécommunications (103) conforme à l'une quelconque des revendications 1 à 5,
- un démultiplexeur (301) conçu pour traiter un premier événement de données provenant d'un réseau de diffusion unidirectionnel (601) et relié au lecteur de carte à puce (102),
- un moyen de rendu (101) permettant d'effectuer un rendu du second événement de données (109) et qui est couplé au démultiplexeur (301) et relié au lecteur de carte à puce (102),
- un moyen permettant de séparer le premier événement de données grâce au démultiplexeur (301) en un second événement de données (109) afin de d'effectuer un rendu, grâce au moyen de rendu, et une partie du premier événement de données en vue d'une personnalisation du combiné téléphonique par le premier gestionnaire (104) de mini application dans la carte à puce (103),
- un moyen permettant d'envoyer le second événement de données (109) au moyen de rendu (101),
- un moyen permettant d'envoyer la partie du premier événement de données à un lecteur de carte à puce (102) en vue d'un traitement par le premier gestionnaire (104) de mini application dans la carte à puce (103),
- un moyen permettant de recevoir une première réponse (402) de la première entité de combiné téléphonique (101) provenant du lecteur de carte à puce (102) grâce au premier gestionnaire (104) de mini application,
- un moyen permettant de transférer la première réponse (402) vers le second gestionnaire (401) de mini application en vue d'une communication avec un réseau de communication mobiles (501).

7. Procédé de traitement de données permettant de commander un combiné téléphonique, le combiné téléphonique comportant un lecteur de carte à puce intégré (102) permettant de recevoir une carte à puce pour télécommunications (103), la carte à puce pour télécommunications (103) comprenant au moins un premier gestionnaire (104) de mini application, un second gestionnaire (401) de mini application et au moins une première mini application (105), le combiné téléphonique comportant au moins une première entité de combiné téléphonique (101) conçue pour recevoir une diffusion de données numériques, le procédé comprenant :
- l'enregistrement de la ou des premières entités de combiné téléphonique (101) sur le premier gestionnaire (104) de mini application,
- la propagation de l'enregistrement depuis le premier gestionnaire (104) de mini application jusqu'à la au moins première mini application (105),
- l'envoi d'une ou de plusieurs premières données de commande (107) depuis la au moins première mini application (105) vers le premier gestionnaire (104) de mini application,
- la propagation de la au moins première donnée de commande (107) à partir du au moins premier gestionnaire (104) de mini application vers la première entité de combiné téléphonique (101),
- la comparaison de la au moins première donnée de commande (107) à au moins un premier événement de données (109) qui se rapporte à une diffusion de données numériques effectuée par l'entité de combiné téléphonique (101),
- l'envoi d'au moins une partie du premier événement de données (110) provenant de la première entité de combiné téléphonique (101) vers au moins le premier gestionnaire (104) de mini application, si la partie du premier événement de données (110) correspond à au moins la première donnée de commande (107),
- la propagation de la partie du premier événement de données (110) provenant du premier gestionnaire (104) de mini application vers au moins la première mini application (105),
- le traitement de la partie du premier événement de données (110) afin de générer un premier signal de retour (111) par au moins la première mini application (105),
- l'envoi du premier signal de retour (111) provenant de la ou des premières mini applications (105) vers le premier gestionnaire (104) de mini application,
- la réception d'une première réponse (402) de la première entité de combiné téléphonique (101) provenant du lecteur de carte à puce (102) par le premier gestionnaire (104) de mini application,
- le transfert de la première réponse (402) vers le second gestionnaire (401) de mini application en vue d'une communication avec un réseau de communications mobiles (501).

8. Procédé selon la revendication 7, dans lequel la carte à puce comprend en outre un second gestionnaire (401) de mini application, et le procédé comprend en outre :
- la réception d'une première réponse (402) provenant de la première entité de combiné téléphonique (101) grâce au premier gestionnaire (104) de mini application,
- le transfert de la première réponse (402) vers le second gestionnaire (401) de mini application en vue d'une communication avec un réseau de communications mobiles (501).

9. Procédé selon l'une quelconque des revendications 7 et 8, dans lequel le premier signal de retour (111) provenant de la première mini application (105) vers le premier gestionnaire (104) de mini application correspond à la description d'une application interactive enrichie pour qu'elle soit affichée sur la première entité de combiné téléphonique.

10. Procédé selon la revendication 7, dans lequel le combiné téléphonique comprend en outre une seconde entité de combiné téléphonique (611), et le procédé comprend en outre :
- la séparation de la diffusion de données numériques par la première entité de combiné téléphonique (101, 608) en une partie de premier événement de données (110) en vue d'une personnalisation du combiné téléphonique par le premier gestionnaire (104, 609) de mini application, et de second événement de données (602) pour qu'un rendu soit effectué par la seconde entité de combiné téléphonique (611).

11. Procédé selon la revendication 7 et la revendication 10, dans lequel la carte à puce (103) comprend en outre un second gestionnaire (610) de mini application couplé à la seconde entité de combiné téléphonique (611), et le procédé comprend en outre :
- la propagation du premier signal de retour (111) provenant du premier gestionnaire (609) de mini application vers le second gestionnaire (610) de mini application,
- l'adaptation du premier signal de retour (111) à un format de rendu de la seconde entité de combiné téléphonique (611).

12. Produit de programme informatique dans une carte à puce pour télécommunications (103) destiné à transporter des données de personnalisation en vue d'une connexion à au moins un réseau de télécommunications mobiles et comprenant au moins un premier gestionnaire (104) de mini application, un second gestionnaire de mini application et au moins une première mini application (105), la carte à puce pour télécommunications comprenant en outre :
- la réception d'un enregistrement d'une première entité de combiné téléphonique (101) provenant d'un lecteur de carte à puce (102) vers un premier gestionnaire (104) de mini application,
- la propagation de l'enregistrement provenant du premier gestionnaire (104) de mini application vers au moins la première mini application (105),
- l'envoi d'au moins une première donnée de commande (107) depuis au moins la première mini application (105) vers le premier gestionnaire (104) de mini application,
- la propagation d'au moins la première donnée de commande (107) provenant du premier gestionnaire (104) de mini application vers le lecteur de carte à puce (102) en vue d'une comparaison au moins de la première donnée de commande (107) à un premier événement de données (109) se rapportant à une diffusion de données numériques par la première entité de combiné téléphonique (101),
- la réception d'au moins une partie du premier événement de données (110) provenant de la première entité de combiné téléphonique (101) par l'intermédiaire du lecteur de carte à puce (102) vers au moins le premier gestionnaire (104) de mini application, si la partie du premier événement de données (110) correspond au moins à la première donnée de commande (107),
- la propagation de la partie du premier événement de données (110) provenant du premier gestionnaire (104) de mini application vers au moins la première mini application (105),
- le traitement de la partie du premier événement de données (110) afin de générer un premier signal de retour (111) grâce à au moins la première mini application (105),
- l'envoi d'un premier signal de retour (111) provenant au moins de la première mini application (105) vers le premier gestionnaire (104) de mini application,
- un moyen permettant de recevoir une première réponse (402) de la première entité de combiné téléphonique (101) provenant du lecteur de carte à puce (102) par le premier gestionnaire (104) de mini application,
- un moyen permettant de transférer la première réponse (402) vers le second gestionnaire (401) de mini application en vue d'une communication avec un réseau de communications mobiles (501).
